# EUROPÄISCHE PATENTSCHRIFT

(11) **EP 0 393 353 B1**
(45) Veröffentlichungstag und Bekanntmachung des Hinweises auf die Patenterteilung: **15.09.1993**
(21) Anmeldenummer: 90104898.3
(22) Anmeldetag: 15.03.1990
(51) Int. Cl.: B60Q 1/04

(54) **Scheinwerfer für Fahrzeuge**
Headlight for vehicles
Phare pour véhicule

(30) Priorität: 21.04.1989 DE 3913151
(43) Veröffentlichungstag der Anmeldung: 24.10.1990
(73) Patentinhaber: Hella KG Hueck & Co., 59552 Lippstadt (DE)
(72) Erfinder: Kathmann, Franz, D-4780 Lippstadt (DE)

(56) Entgegenhaltungen:
- DE-A- 3 147 938
- DE-C- 3 425 646
- DE-U- 8 713 631
- FR-A- 2 298 059
- FR-A- 2 619 539

## Beschreibung

Die Erfindung bezieht sich auf einen Scheinwerfer für Fahrzeuge mit den Merkmalen:
- ein aus Kunststoff bestehender Reflektor ist mit einem Aufnahmeteil um eine oder um zwei vorzugsweise senkrecht zueinander verlaufende Achsen verstellbar verbunden,
- die Verbindung des Reflektors mit dem Aufnahmeteil ist von einem an das Aufnahmeteil angebrachten ersten bolzenartigen Verbindungsteil und einem aus Kunststoff bestehenden zweiten Verbindungsteil gebildet, welches in Lichtaustrittsrichtung auf ein auf der Reflektorrückseite einstückig mit dem Reflektor ausgeführten Wandungsteil mit ebenen breiten Seitenflächen aufgesetzt ist,
- das erste bolzenartige Verbindungsteil verläuft in Lichtaustrittsrichtung und ist an seinem freien dem Reflektor nahen Ende mit einem Kugelkopf versehen, welcher selbstrastend in eine Kugelpfanne des aus Kunststoff hergestellten zweiten Verbindungsteils eingesetzt ist, wobei die Fügerichtung der Einsetzrichtung des Reflektors in das Aufnahmeteil entspricht.

Ein solcher Scheinwerfer ist aus der DE-A- 35 09 831 bekannt. Als erster Verbindungsteil dient ein Schraubbolzen, dessen Längsachse in Einsetzrichtung des Reflektors verläuft. Der Schraubbolzen weist an seinem freien in das Scheinwerferinnere ragende Ende einen Kugelkopf auf, welcher beim Einsetzen des Reflektors in das Aufnahmeteil selbstragend in eine Kugelpfanne des aus Kunststoff bestehenden zweiten Verbindungsteils einrastet.

Da die Längsachse des Schraubbolzens in einem Abstand zu einer breiten Seitenfläche des Wandungsteils verläuft, wird das Wandungsteil bei der Herstellung der selbstrastenden Verbindung sehr stark auf Biegung beansprucht. Aus diesem Grund ist das Wandungsteil wesentlich dicker ausgeführt als die Reflexionsschale des Reflektors. Um einen festen Sitz des zweiten Verbindungsteils auf dem Wandungsteil zu erhalten, ist dieses hülsenartig ausgeführt und auf einen zu 'seinem freien Ende hin konisch verjüngenden Wandungsteil aufgeschoben, bis die Innenseiten der Hülsen an den Seitenflächen des Wandungsteils anliegen und eine an eine Innenseite der Hülse angeformte Rastnase in eine Öffnung des Wandungsteils selbstrastend eingreift. Dadurch weist das Wandungsteil seine größte Wandstärke an der Verbindungsstelle zur Reflexionsschale hin auf. Außerdem muß das Wandungsteil sehr dick ausgeführt sein, damit der Reflektor quer zu den breiten Seitenflächen des Wandungsteils fest und schwingungsfrei in dem Aufnahmeteil gehalten ist. Durch das relativ dicke Wandungsteil können an der Reflexionsfläche des Reflektors Einfallstellen entstehen, und somit kann für den Gegenverkehr störendes Streulicht enststehen.

Aus der DE-C-35 43 563 ist ein Scheinwerfer für Fahrzeuge bekannt, bei welchem der Wandungsteil aus einem an die Rückseite der Reflexionsschale angeformten Hohlzylinder besteht, dessen Wandung sich zu seinem freien Ende hin konisch verjüngt. Somit ist die Wandstärke des Hohlzylinders an dem an den Reflektor angeformten Endabschnitt wesentlich dicker als die Wandung des Reflektors. Dies ist notwendig, damit der Hohlzylinder dem hohen Druck der klemmend in ihn eingeschobenen Kugelpfanne standhält. Damit die Kugelpfanne sich nicht aus ihrer klemmenden Verbindung mit dem hohlzylinderförmigen Wandungsteil löst, ist an die Kugelschale ein in Einsetzrichtung der Kugelschale weisender federnder Arm angeformt, welcher mit seiner Rastnase in eine Öffnung an der Außenseite des Zylinders eingreift. Eine solche Verbindung kann bei engen Platzverhältnissen auf der Reflektorrückseite nicht immer untergebracht werden, da der Außendurchmesser des Hohlzylinders entsprechend den Abmessungen der von ihm aufgenommenen Kugelpfanne groß gestaltet sein muß.

Bei dem aus der DE-C-34 25 646 bekannten Scheinwerfer ist das Wandungsteil nicht unmittelbar an die Reflexionsschale des Reflektors angebunden, so daß hierbei keine Probleme bezüglich der Wandstärke des Wandungsteils bestehen.

Außerdem wird auch bei diesem Scheinwerfer beim selbstrastenden Verbinden der Verbindungsteile das Wandungsteil sehr stark auf Biegung beansprucht, und es ist nicht sichergestellt, daß der Reflektor in dem Aufnahmeteil fest und schwingungsfrei gehalten ist.

Aufgabe der Erfindung ist es nun, den im Gattungsbegriff beschriebenen Scheinwerfer derart zu verbessern, daß das auf der Reflektorrückseite einstückig mit dem Reflektor ausgeführte Wandungsteil so dünnwandig ausgeführt sein kann, daß auf der die Reflexionsfläche aufweisenden Vorderseite des Reflektors keine störenden Einfallstellen entstehen und dabei trotzdem das Wandungsteil der beim selbstrastenden Verbinden des ersten und zweiten Verbindungsteils auftretenden großen Kraft standhält, das heißt, das Wandungsteil nicht auf Biegung beansprucht wird. Darüber hinaus soll ein einstückig mit dem Reflektor und ohne verstellbare Werkzeugteile herstellbares Element des Wandungsteils den Reflektor quer zu seinen breiten Seitenflächen weitgehend fest und schwingungsfrei halten und das zweite Verbindungsteil bei seinem Aufsetzen auf das Wandungsteil bis zu seinem selbstrastenden Verbinden führen. Außerdem soll das zweite Verbindungsteil durch das Element des Wandungsteils radial zur Einsetzrichtung des Reflektors arretiert werden können.

Diese Aufgabe wird nach der Erfindung dadurch gelöst, daß
- die Wandstärke des an der Reflektorrückseite einteilig mit dem Reflektor ausgeführten Wandungsteils der Wandstärke des dünnwandigen Reflektors entspricht,
- das auf das Wandungsteil aufgesetzte zweite Verbindungsteil klammerartig ausgeführt ist,
- in Einsetzrichtung des Reflektors gesehen die Verbindungsstelle zwischen dem ersten und zweiten Verbindungsteil fluchtend hinter einem dünnwandigen Wandungsteil des Reflektors liegt,
- an eine breite Seitenfläche des Wandungsteils eine mit der Rückseite des Reflektors verbundene Rippe angeformt ist, welche parallel zur Aufsetzrichtung des klammerartigen Verbindungsteils verläuft und an welcher ein Schenkel des klammerartigen Verbindungsteils mit einer schmalen Längsseite in unmittelbarer Nähe verläuft.

Bei einer vorteilhaften Weiterbildung der Erfindung verlaufen zwei Wandungsteile mit ihren als Anlagefläche dienenden breiten Seitenflächen senkrecht zueinander. Dadurch ist, obwohl die Biegefestigkeit der Wandungsteile quer zu ihren breiten Seitenflächen relativ gering ist, der Reflektor quer zu den breiten Seitenflächen der Wandungsteile weitgehend fest und schwingungsfrei in dem Aufnahmeteil gehalten. In diesem Zusammenhang ist es weiterhin vorteilhaft, wenn quer zur Einsetzrichtung des klammerartigen Verbindungsteils gesehen das Wandungsteil länger als das klammerartige Verbindungsteil breit ist. Dadurch erhöht sich die Biegefestigkeit des Wandungsteils quer zu ihren breiten Seitenflächen.

Weiterhin ist es vorteilhaft, wenn ein klammerartiges Verbindungsteil mit seinen Schenkeln zwischen vorspringenden Rippen des Wandungsteils angeordnet ist und die Rippen auf einer oder beiden breiten Seitenflächen des Wandungsteils angeordnet sind. Solche Rippen können die Schenkel des klammerartigen Verbindungsteils klemmend zwischen sich festsetzen und/oder als Führung für die Schenkel beim Aufsetzen des klammerartigen Verbindungsteils dienen. Zum besseren Einfädeln der Schenkel zwischen die Rippen ist es weiterhin vorteilhaft, wenn mindestens ein Schenkel des klammerartigen Verbindungsteils sich mit seinen schmalen Längsseiten zu seinem freien Ende hin verjüngt.

Vorteilhaft ist es weiterhin, wenn von zwei an einer breiten Seitenfläche eines Wandüngsteils angeformten Rippen eine keilförmige Nut gebildet wird, an deren keilförmig zueinander stehenden Seitenflachen ein Schenkel des klammerartigen Verbindungsteils mit entsprechend keilförmig zueinander verlaufenden schmalen Längsseiten federnd anliegt. Bei einer solchen Ausführungsform ist der Festsitz des klammerartigen Verbindungsteils auf dem Wandungsteil sehr gut.

Hierbei ist es weiterhin zweckmäßig, wenn eine am freien Endabschnitt eines Schenkels des klammerartigen Verbindungsteils angeformte Rastnase in eine Hinterschneidung des Wandungsteils selbstrastend eingreift und dabei mit einer sie zum freien Ende hin verjüngenden Auflaufschräge an dem Rand der Hinterschneidung anliegt. Dadurch kann das klammerartige Verbindungsteil schnell und einfach an dem Wandungsteil befestigt werden, und darüber hinaus gleicht die Auflaufschräge der Rastnase Toleranzen zwischen ihr und dem die Schenkel verbindenden Steg des klammerartigen Verbindungsteils aus, so daß der Steg auf seiner gesamten Länge fest an der Stirnfläche des Wandungsteils anliegt.

Um das klammerartige Verbindungsteil leichter auf das Wandungsteil aufschieben zu können, ist es weiterhin vorteilhaft, wenn das Wandungsteil an dem die Schenkel verbindenden Steg des klammerartigen Verbindungsteils benachbarten Endabschnitt eine Auflaufschräge für die Rastnase aufweist. Dadurch gleitet die Rastnase beim Aufschieben des klammerartigen Verbindungsteils an der Auflaufschräge entlang, bis sie in der Endstellung des klammerartigen Verbindungsteils die Hinterschneidung des Wandungsteils hintergreift.

Bei einer anderen vorteilhaften Weiterbildung der Erfindung ist an den die Schenkel verbindenden Steg des klammerartigen Verbindungsteils ein federndes Element angeformt, welches unter Vorspannung an der Stirnfläche des Wandungsteils anliegt. Zweckmäßig ist es hierbei, wenn das federnde Element flügelartig ausgeführt ist und der Flügel zentral an dem Steg angeformt ist, während er mit seinem freien Endabschnitten federnd an der Stirnflache des Wandungsteils anliegt. Dadurch ist auch bei sehr großen Toleranzen zwischen dem Wandungsteil und dem klammerartigen Verbindungsteil sichergestellt, daß das klammerartige Verbindungsteil in seiner Fügerichtung spielfrei an dem Wandungsteil festsitzt.

Bei einer besonders vorteilhaften Weiterbildung der Erfindung beschreibt die Rastnase des klammerartigen Verbindungsteils in ihrem Querschnitt einen Kreisbogen, mit welchem sie an der von einer kreisrunden Öffnung des Wandungsteils gebildeten Hinterschneidung anliegt und dessen Mittelpunkt auf der Mittelachse der kreisrunden Öffnung liegt. Bei einer solchen vorteilhaften Lösung ist es möglich, das klammerartige Verbindungsteil um die von seiner Rastnase und der Öffnung gebildeten Achse zu schwenken. In diesem Zusammenhang ist es weiterhin vorteilhaft, wenn das Wandungsteil, welches mit einem verstellbaren Verbindungsteil gekoppelt ist, mit seinen breiten Seitenflächen senkrecht zu der Schwenkachse verläuft, um welche es schwenkbar ist. Dadurch entstehen beim Verschwenken des Reflektors keine Verspannungskräfte, welche sonst bei dünnwandigen Reflektoren den Verlauf ihrer Reflexionsfläche verändern.

Ebenfalls ist es vorteilhaft, wenn direkt oberhalb des die Schenkel verbindenden Stegs des klammerartigen Verbindungsteils die Verbindungsstelle angeordnet ist. Bei einer solchen Lösung muß das Wandungsteil quer zur Einsetzrichtung des Reflektors gesehen nicht wesentlich länger ausgeführt sein als die Schenkel des klammerartigen Verbindungsteils breit sind.

Außerdem ist es vorteilhaft, wenn das Wandungsteil in Einsetzrichtung des klammerartigen Verbindungsteil gesehen T-förmig gestaltet ist und mit seiner Stirnfläche im Bereich des senkrechten Balkens der T-Form als Anlagefläche für den die Verbindungsstelle bildenden Bereich der Verbindungsteile dient, während das klammerartige Verbindungsteil auf den den Querbalken der T-Form bildenden Bereich des Wandungsteils aufgeschoben ist. Hierbei ist es weiterhin zweckmäßig, wenn ein Schenkel des klammerartigen Verbindungsteils in eine Aussparung des T-förmigen Wandungsteils eingreift und das Wandungsteil im Bereich des senkrechten Balkens der T-Form eine geringere Höhe als im Bereich des Querbalkens aufweist. Eine solche Ausführungsform ist besonders dann vorteilhaft, wenn zur Rückseite des Reflektors hin wenig Raum zur Verfügung steht, da in diesem Fall die Verbindungsstelle nicht ober.halb des klammerartigen Verbindungsteils, sondern seitlich von diesem angeordnet ist.

Bei einer zweckmäßign Ausgestaltung der Erfindung wird die Verbindungsstelle von einer Kugelschale des zweiten Verbindungsteils und einem selbstrastend in die Kugelschale eingesetzten Kugelkopf eines an dem Aufnahmeteil befestigten Bolzens gebildet, dessen Längsachse in Einsetzrichtung des Reflektors verläuft. Liegt bei einer solchen Lösung das Kugelgelenk direkt oberhalb des die Schenkel verbindenden Stegs, welcher für die Klammer als Gelenk dient, so erhöht sich der Druck des Schenkels gegen das Wandungsteil durch den Druck des Kugelkopfes gegen die Gelenkschale.

Die Erfindung ist in der Zeichnung dargestellt, und zwar zeigt
Figur 1 eine Rückansicht auf einen Reflektor mit zwei Reflexionsschalen als Einzelteil,
Figur 2 einen Schnitt nach der Linie A-A durch den Festpunkt des Reflektors mit den Reflektor in einem Aufnahmeteil haltenden Verbindungsteil,
Figur 3 eine Ansicht aus Richtung X auf ein Wandungsteil des Reflektors mit dem klammerartigen Verbindungsteil, welches auf das Wandungsteil aufgeschoben ist,
Figur 4 einen Schnitt nach der Linie B-B durch einen verstellbaren Punkt des Reflektors, bei welchem das klammerartige Verbindungsteil und das Wandungsteil des Reflektors anders gestaltet ist,
Figur 5 in einem mittleren Längsschnitt ein ein zweites Ausführungsbeispiel der Erfindung darstellendes klammerartiges Verbindungsteil mit dem zwischen seinen Schenkeln angeordneten Abschnitt des Wandungsteil des Reflektors,
Figur 6 einen Schnitt nach der Linie C-C durch das klammerartige Verbindungsteil nach Figur 5,
Figur 7 einen mittleren Längsschnitt durch ein ein drittes Ausführungsbeispiel darstellendes klammerartiges Verbindungsteil mit dem zwischen seinen Schenkeln angeordneten Abschnitt eines Wandungsteils des Reflektors und
Figur 8 einen Schnitt nach der Linie D-D durch das Verbindungsteil nach Figur 7.

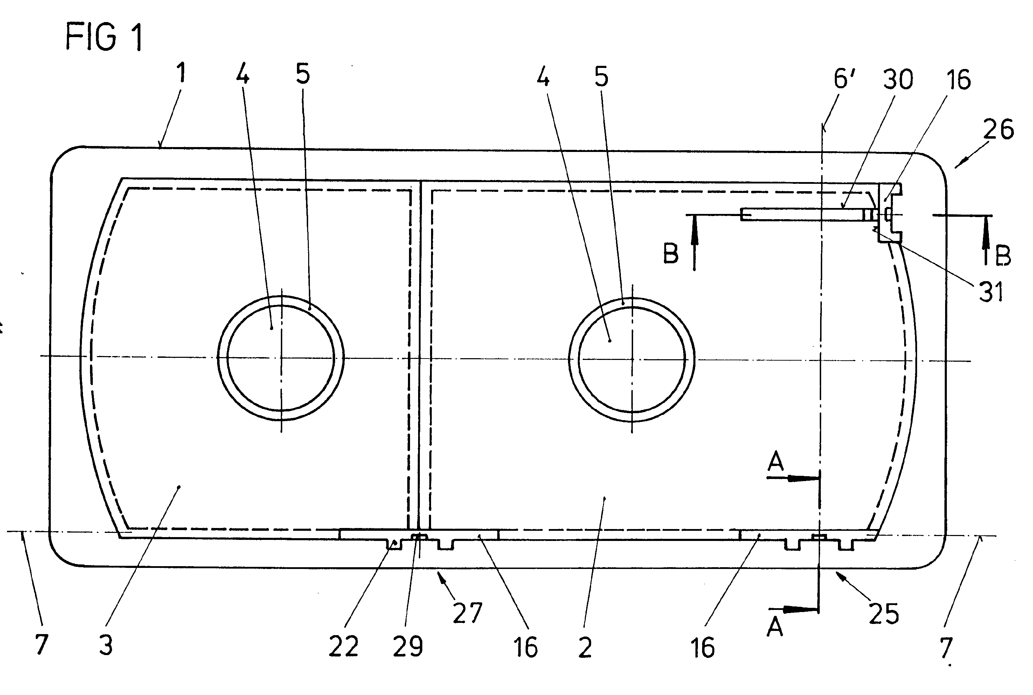

Der aus Kunststoff bestehende Reflektor (1) (siehe Figur 1) ist rechteckförmig gestaltet und weist zwei unmittelbar aneinandergrenzende Reflektorschalen (2 und 3) auf. Am Scheitel der Reflektorschalen (2 und 3) ist die zur Aufnahme einer Glühlampe (nicht dargestellt) dienende Öffnung (4) eingebracht, welche auf der Reflektorrückseite von einem Kragen (5) umgeben ist. Der Reflektor (1) ist um zwei senkrecht zueinander verlaufende Achsen (6 und 7) verstellbar. Der Reflektor (1) ist in einem Aufnahmeteil (8) durch ein in das Aufnahmeteil eingesetztes erstes Verbindungsteil (9) und ein aus Kunststoff bestehendes zweites Verbindungsteil (10), welches an dem Reflektor (1) befestigt ist, gehalten. Als erstes Verbindungsteil (9) dient ein in dem Aufnahmeteil (8) verschraubbar geführter Bolzen, dessen Längsachse parallel zur Einsetzrichtung (11) des Reflektors verläuft. An dem aus dem Aufnahmeteil (8) nach außen herausragenden freien Endabschnitt des Schraubbolzens ist ein Griffteil (12) befestigt, während der in das Scheinwerferinnere ragende Endabschnitt des Schraubbolzens (9) einen Kugelkopf (13) aufweist.

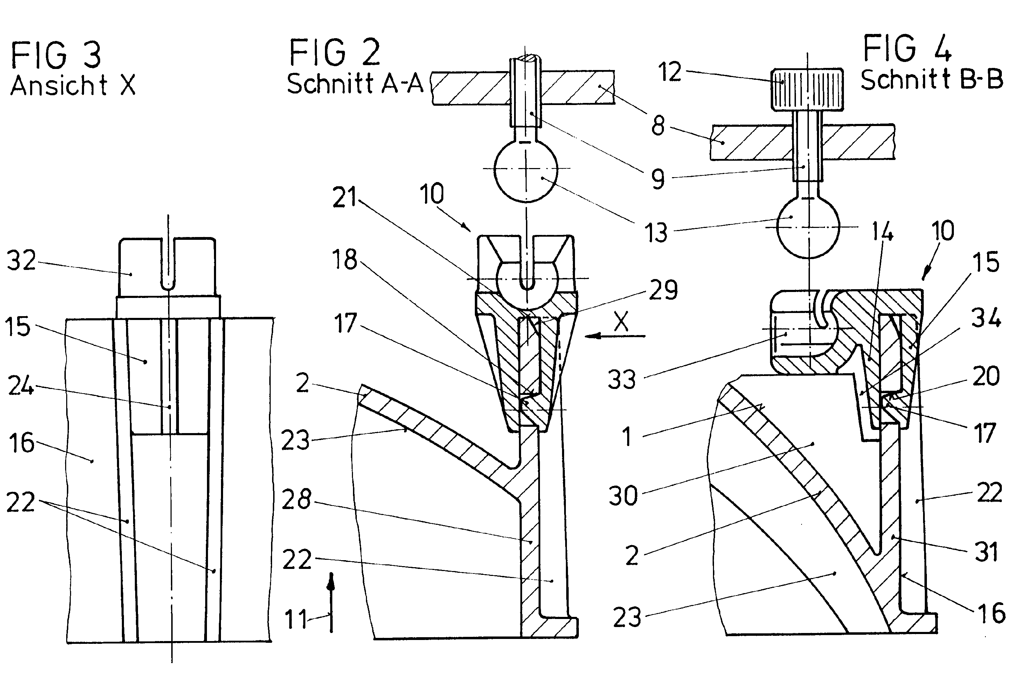

Das aus Kunststoff bestehende zweite Verbindungsteil (10) ist klammerartig ausgeführt, und mit den in seiner Einsetzrichtung weisenden Schenkeln (14 und 15) ist es auf das Wandungsteil (16), welches an die Rückseite der Reflexionsschale (2 bzw. 3) angeformt ist, aufgeschoben. Mit den Schenkeln (14 und 15) liegt das klammerartige Verbindungsteil (10) an den breiten Seitenflächen des Wandungsteils (16) unter Vorspannung an und greift mit einer an dem freien Ende des Schenkels (15) angeformten Rastnasen (17) in eine von einer Öffnung des Wandungsteils (16) gebildeten Hinterschneidung (18) ein. In den Figuren 2 bis 5 weist die Rastnase (17) eine sie verjüngende Auflaufschräge (20) auf, mit welcher sie unter Vorspannung an dem äußeren Rand der Hinterschneidung (18) anliegt und den die Schenkel (14 und 15) verbindenden Steg (21) gegen die Stirnflache des Wandungsteils (16) drückt. Dabei liegt der Schenkel (21) auf seiner gesamten Länge an der Stirnfläche des Wandungsteils (16) fest an. Die in ihrem Querschnitt rechteckförmigen Schenkel (14 und 15) verjüngen sich mit ihren schmalen Längsseiten zu ihrem freien Ende hin und liegen mit ihren schmalen Längsseiten an den Innenseiten von den Rippen (22) an. Die Rippen (22) können etwas dicker als der Wandungsteil (16) ausgeführt sein, da diese nicht an die die aktive Reflexionsfläche (23) aufweisende Reflektorschale (2 und 3) angeformt sind. An der Außenseite der Schenkel (14 und 15) sind in ihrer Längsausdehnung verlaufende Versteifungsrippen (24) angeformt.

In dem Schnittpunkt der beiden Achsen (6 und 7) liegt der Festpunkt (25) des Reflektors, während die Punkte (26 und 27) verstellbar sind. Der mit dem Festpunkt (25) und dem verstellbaren Punkt (27) gekoppelte Wandungsteil (16) ist an einen abgeflachten Wandungsabschnitt (28) des Reflektors (1) angeformt. Zwischen den Rippen (22) weist der Wandungsteil (16) an seinem freien Ende eine Auflaufschräge (29) auf, welche beim Aufsetzen des klammerartigen Verbindungsteils (10) als Gleitfläche für die Rastnase (17) dient. Am verstellbaren Punkt (27) dient das Wandungsteil (16) als ein die beiden Reflektorschalen (2 und 3) verbindender Steg. Dadurch erhöht sich die Steifigkeit zwischen den beiden Reflektorschalen (2 und 3). Der mit dem verstellbaren Punkt (26) gekoppelte Wandungsteil (16) ist in Einsetzrichtung des Reflektors gesehen T-förmig ausgeführt. Der den senkrechten Balken (30) der T-Form bildende Bereich des Wandungsteils (16) ist niedriger ausgeführt als der den Querbalken (31) bildende Bereich des Wandungsteils (16). Als Verbindungsstelle zwischen dem ersten Verbindungsteil (9) und dem zweiten Verbindungsteil (10) dient der Kugelkopf (13) und die in das zweite Verbindungsteil (10) angeformte Gelenkpfanne (32 oder 33). Beim Einsetzen des Reflektors (1) in das Aufnahmeteil (8) wird der Kugelkopf (13) selbstrastend in die Gelenkpfanne (32) eingedrückt. Bei dem Festpunkt (25) und dem verstellbaren Punkt (27) liegt die Verbindungsstelle (13, 32) zwischen dem ersten und zweiten Verbindungsteil (9 und 10) direkt oberhalb des die Schenkel verbindenden Stegs (21), während beim verstellbaren Punkt (26) das klammerartige Verbindungsteil (10) mit seinen Schenkeln (14 und 15) auf den Querbalken (31) des T-förmigen Wandungsteils (16) aufgeschoben ist und die Verbindungsstelle (13, 33) direkt oberhalb des Abschnittes des Wandungsteiles (16) liegt, welcher den senkrechten Balken der T-Form bildet. Somit liegt sowohl an dem Festpunkt (25) und an dem verstellbaren Punkt (27) als auch an dem verstellbaren Punkt (26) die Verbindungsstelle zwischen dem ersten und zweiten Verbindungsteil (9 und 10) fluchtend hinter dem dünnwandigen Wandungsteil (16). Beim verstellbaren Punkt (26) ist die Gelenkpfanne (33) seitlich geöffnet, so daß bei einer Demontage des Reflektors der Kugelkopf (13) leicht aus der Gelenkpfanne (33) herausgeschwenkt werden kann.

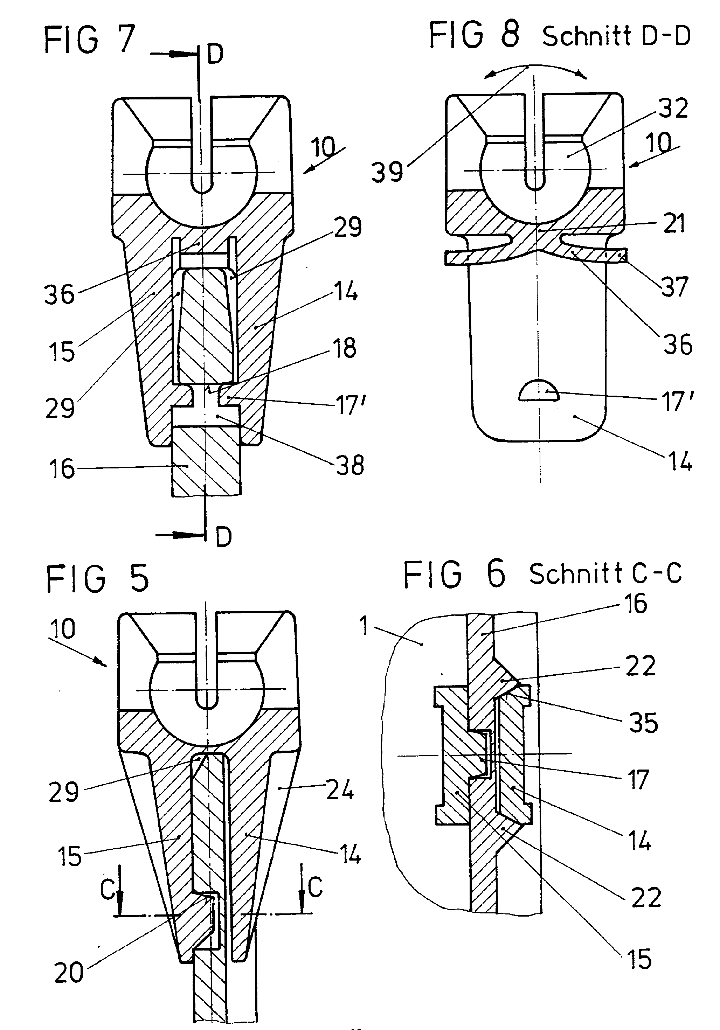

Das in den Figuren 5 und 6 dargestellte klammerartige Verbindungsteil (10) und das Wandungsteil (16) unterscheidet sich zu dem vorstehenden klammerartigen Verbindungsteil folgendermaßen. Die Rippen (22), welche an eine breite Seitenfläche des Wandungsteils (16) angeformt sind, bilden eine keilförmige Nut, an deren keilförmigen Seitenflächen der zur Grundfläche der Nut hin beabstandete Schenkel (14) des klammerartigen Verbindungsteils (10) unter Vorspannung anliegt. Der Schenkel (15) liegt mit seiner gesamten Innenseite unter Vorspannung an der ihm benachbarten breiten Seitenfläche des Wandungsteils (16) an.

Das in den Figuren 7 und 8 dargestellte klammerartige Verbindungsteil (10) weist zwischen der Stirnfläche des Wandungsteils (16) und dem die Schenkel (14 und 15) verbindenden Steg (21) ein an den Steg (21) angeformtes federndes Element (36) auf. Das federnde Element (36) ist flügelartig ausgeführt. Der Flügel (36) ist zentral an dem die Schenkel verbindenden Steg (21) angeformt, während der Flügel mit seinen freien Enden (37) unter Vorspannung an der Stirnfläche des Wandungsteils (16) anliegt und die an den freien Enden der beiden Schenkel (14 und 15) angeformten Rastnasen (17') gegen die von einer kreisrunden Öffnung (38) gebildeten Hinterschneidung drückt. Die Rastnasen (17') beschreiben in ihrem Querschnitt einen Kreisbogen, mit dem sie an der Hinterschneidung (18) anliegen. Die Wandungsteile weisen an ihren breiten Seitenflächen keine Rippen auf, so daß die klammerartigen Verbindungsteile (10) die von den Rastnasen und der Öffnung (38) gebildete Achse schwenkbar sind (siehe Pfeil 39). Hierbei ist es zweckmäßig, wenn die Stirnfläche des Wandungsteils (16) einen Kreisbogen beschreibt, dessen Mittelpunkt auf der Schwenkachse des klammerartigen Verbindungsteils (10) liegt. Beim Aufsetzen des Verbindungsteils (10) auf das Wandungsteil (16) gleitet jede Rastnase (17') auf einer Auflaufschräge (20) des Wandungsteils (16) entlang, bis sie in die Öffnung (38) selbstrastend eingreifen.

## Patentansprüche

1. Scheinwerfer für Fahrzeuge mit den Merkmalen:
- ein aus Kunststoff bestehender Reflektor (1) ist mit einem Aufnahmeteil (8) um eine oder um zwei vorzugsweise senkrecht zueinander verlaufende Achsen (6, 7) verstellbar verbunden,
- die Verbindung des Reflektors (1) mit dem Aufnahmeteil (8) ist von einem an das Aufnahmeteil (8) angebrachten ersten bolzenartigen Verbindungsteil (9) und einem aus Kunststoff bestehenden zweiten Verbindungsteil (10) gebildet, welches in lichtaustrittsrichtung auf ein auf der Reflektorrückseite einstückig mit dem Reflektor ausgeführten Wandungsteil (16) mit ebenen breiten Seitenflächen aufgesetzt ist,
- das erste bolzenartige Verbindungsteil (9) verläuft in Lichtaustrittsrichtung und ist an seinem freien dem Reflektor (1) nahen Ende mit einem Kugelkopf (13) versehen, welcher selbstrastend in eine Kugelpfanne (32) des aus Kunststoff hergestellten zweiten Verbindungsteils (10) eingesetzt ist, wobei die Fügerichtung der Einsetzrichtung (11) des Reflektors (1) in das Aufnahmeteil (8) entspricht,
dadurch gekennzeichnet, daß
- die Wandstärke des an der Reflektorrückseite einteilig mit dem Reflektor (1) ausgeführten Wandungsteils (16) der Wandstärke des dünnwandigen Reflektors (1) entspricht,
- das auf das Wandungsteil (16) aufgesetzte zweite Verbindungsteil (10) klammerartig ausgeführt ist,
- in Einsetzrichtung (11) des Reflektors (1) gesehen die Verbindungsstelle (13, 32) zwischen dem ersten und zweiten Verbindungsteil (9 und 10) fluchtend hinter einem dünnwandigen Wandungsteil (16) des Reflektors (1) liegt,
- an eine breite Seitenfläche des Wandungsteils (16) eine mit der Rückseite des Reflektors (1) verbundene Rippe (22) angeformt ist, welche parallel zur Aufsetzrichtung des klammerartigen Verbindungsteils (10) verläuft und an welcher ein Schenkel (14 oder 15) des klammerartigen Verbindungsteils (10) mit einer schmalen Längsseite in unmittelbarer Nähe verläuft.

2. Scheinwerfer nach Anspruch 1, dadurch gekennzeichnet, daß mindestens ein klammerartiges Verbindungsteil (10) mit seinen Schenkeln (14 und 15) zwischen vorspringenden Rippen (22) des Wandungsteils (16) angeordnet ist.

3. Scheinwerfer nach Anspruch 2, dadurch gekennzeichnet, daß die Rippen (22) auf einer oder beiden breiten Seitenflächen des Wandungsteils (16) angeordnet sind.

4. Scheinwerfer nach einem der Ansprüche 1 bis 3, dadurch gekennzeichnet, daß mindestens ein Schenkel (14 oder 15) des klammerartigen Verbindungsteils (10) sich mit seinen schmalen Längsseiten zu seinem freien Ende hin verjüngt.

5. Scheinwerfer nach Anspruch 4, dadurch gekennzeichnet, daß ein Schenkel (15) des klammerartigen Verbindungsteils mit seinem schmalen Längsseiten an den Rippen (22) anliegt.

6. Scheinwerfer nach einem der Ansprüche 1 bis 5, dadurch gekennzeichnet, daß von zwei an einer breiten Seitenfläche eines Wandungsteils (16) angeformte Rippen (22) eine keilförmige Nut gebildet wird, an deren keilförmig zueinanderstehenden Seitenflächen (35) ein Schenkel (14) des klammerartigen Verbindungsteils (10) mit entsprechend keilförmig zueinanderverlaufenden schmalen Längsseiten federnd anliegt.

7. Scheinwerfer nach einem der Ansprüche 1 bis 6, dadurch gekennzeichnet, daß eine am freien Endabschnitt eines Schenkels (15) des klammerartigen Verbindungsteils angeformte Rastnase (17, 17') in eine Hinterschneidung (18) des Wandungsteils (16) selbstrastend eingreift.

8. Scheinwerfer nach Anspruch 7, dadurch gekennzeichnet, daß die Rastnase mit einer sie zum freien Ende hin verjüngenden Auflaufschräge (20) an dem Rand der Hinterschneidung (18) anliegt.

9. Scheinwerfer nach Anspruch 7 oder 8, dadurch gekennzeichnet, daß das Wandungsteil (16) an dem die Schenkel (14 und 15) verbindenden Steg (21) des klammerartigen Verbindungsteils (10) benachbarten Endabschnitt eine Auflaufschräge (29) für die Rastnase (17, 17') aufweist.

10. Scheinwerfer nach einem der Ansprüche 1 bis 9, dadurch gekennzeichnet, daß der die Schenkel (14 und 15) verbindende Steg (21) des klammerartigen Verbindungsteils (10) mit seiner gesamten Länge fest an der Stirnfläche des Wandungsteils (16) anliegt.

11. Scheinwerfer nach einem der Ansprüche 1 bis 9, dadurch gekennzeichnet, daß an den die Schenkel (14 und 15) verbindenden Steg (21) des klammerartigen Verbindungsteils (10) ein federndes Element (36) angeformt ist, welches unter Vorspannung an der Stirnfläche des Wandungsteils (16) anliegt.

12. Scheinwerfer nach Anspruch 11, dadurch gekennzeichnet, daß das federnde Element (36) flügelartig ausgeführt ist und der Flügel (36) zentral an dem Steg (21) angeformt ist, während er mit seinen freien Endabschnitten (37) federnd an der Stirnfläche des Wandungsteils (16) anliegt.

13. Scheinwerfer nach einem der vorstehenden Ansprüche, dadurch gekennzeichnet, daß die Rastnase (17') des klammerartigen Verbindungsteils (10) in ihrem Querschnitt einen Kreisbogen beschreibt, mit welchem sie an der von einer kreisrunden Öffnung (38) des Wandungsteils (16) gebildeten Hinterschneidung (18) anliegt und dessen Mittelpunkt auf der Mittelachse der kreisrunden Öffnung (38) liegt.

14. Scheinwerfer nach einem der vorstehenden Ansprüche, dadurch gekennzeichnet, daß das Wandungsteil (16), welches mit einem verstellbaren Verbindungsteil (26 oder 27) gekoppelt ist, mit seiner breiten Seitenfläche senkrecht zu der Schwenkachse verläuft, um welche es schwenkbar ist.

15. Scheinwerfer nach einem der Ansprüche 1 bis 14, dadurch gekennzeichnet, daß direkt oberhalb des die Schenkel (14 und 15) verbindenen Stegs (21) des klammerartigen Verbindungsteils (10) die Verbindungsstelle (13, 32) angeordnet ist.

16. Scheinwerfer nach einem der Ansprüche 1 bis 15, dadurch gekennzeichnet, daß das Wandungsteil (16) in Einsetzrichtung des klammerartigen Verbindungsteils (10) gesehen T-förmig gestaltet ist und mit seiner Stirnfläche im Bereich des senkrechten Balkens (30) der T-Form als Anlagefläche für den die Verbindungsstelle (13, 33) bildenden Bereich der Verbindungsteile dient, während das klammerartige Verbindungsteil (10) auf den den Querbalken (31) der T-Form bildenden Bereich des Wandungsteils (16) aufgeschoben ist.

17. Scheinwerfer nach Anspruch 16, dadurch gekennzeichnet, daß ein Schenkel (14) des klammerartigen Verbindungsteils (10) in eine Aussparung (34) des T-förmigen Wandungsteils (16) eingreift.

18. Scheinwerfer nach Anspruch 16 oder 17, dadurch gekennzeichnet, daß das Wandungsteil (16) im Bereich des senkrechten Balkens (30) der T-Form eine geringere Höhe als im Bereich des Querbalkens aufweist.

19. Scheinwerfer nach einem der Ansprüche 1 bis 18, dadurch gekennzeichnet, daß das Wandungsteil (16) in einen abgeflachten Wandungsabschnitt (28) des schalenförmigen Reflektors übergeht.

20. Scheinwerfer nach einem der Ansprüche 1 bis 19, dadurch gekennzeichnet, daß zwei Wandungsteile (16) mit ihren als Anlagefläche dienenden breiten Seitenflächen senkrecht zueinander verlaufen.

## Claims

1. Vehicle headlamp comprising the following features:
- a reflector (1) made of plastic is so connected to a locating part (8) as to be adjustable about one or two preferably mutually perpendicular axes (6, 7),
- the connection of the reflector (1) to the locating part (8) is constituted by a first bolt-type connecting part (9) mounted onto the locating part (8), and a second connecting part (10), made of plastic, which is placed in the direction of the escaping light onto a wall part (16) with plane broad lateral faces which on the reverse of the reflector is of integral construction with the reflector,
- the first bolt-type connecting part (9) extends in the direction of the escaping light and on its free end nearest the reflector (1) is provided with a spherical head (13) which is inserted in self-locking manner into a ball socket (32) in the second connecting part (10) made of plastic, the direction of the join corresponding to the direction (11) of insertion of the reflector (1) into the locating part (8),
characterised in that
- the thickness of the wall part (16) which is of integral construction with the reflector (1) on the reverse of the reflector matches the thickness of the thin-walled reflector (1),
- the second connecting part (10) placed onto the wall part (16) is a bracket-type construction,
- viewed in the direction (11) in which the reflector (1) is inserted, the points of connection (13, 32) between the first and second connecting parts (9 and 10) lie in line behind a thin wall part (16) of the reflector (1),
- formed onto one broad lateral face of the wall part (16) is a rib (22), joined to the reverse of the reflector (1) and which extends parallel to the direction of placement of the bracket-type connecting part (10) and on which one leg (14 or 15) of the bracket-type connecting part (10) extends with one narrow long side in direct proximity.

2. Headlamp according to claim 1, characterised in that at least one bracket-type connecting part (10) is disposed with its legs (14 and 15) between projecting ribs (22) of the wall part (16).

3. Headlamp according to claim 2, characterised in that the ribs (22) are disposed on one or both broad lateral faces of the wall part (16).

4. Headlamp according to any of claims 1 to 3, characterised in that the narrow long sides of at least one leg (14 or 15) of the bracket-type connecting part (10) taper towards the free end thereof.

5. Headlamp according to claim 4, characterised in that one leg (15) of the bracket-type connecting part rests with its narrow long sides against the ribs (22).

6. Headlamp according to any of claims 1 to 5, characterised in that two ribs (22) formed on one broad lateral face of a wall part (16) constitute a cuneiform groove against the cuneiformly meeting lateral faces (35) of which one leg (14) of the bracket-type connecting part (10) resiliently rests with correspondingly cuneiformly merging narrow long sides.

7. Headlamp according to any of claims 1 to 6, characterised in that a locking lug (17, 17') formed on the free end portion of one leg (15) of the bracket-type connecting part engages in self-locking manner in an undercut (18) of the wall part (16).

8. Headlamp according to claim 7, characterised in that the locking lug rests against the edge of the undercut (18) by a ramp (20) which narrows said lug towards the free end.

9. Headlamp according to claim 7 or 8, characterised in that the wall part (16) incorporates a ramp (29) for the locking lug (17. 17') on the end portion adjoining the crosspiece (21) connecting the legs (14 and 15) of the bracket-type connecting part (10).

10. Headlamp according to any of claims 1 to 9, characterised in that the crosspiece (21) joining the legs (14 and 15) of the bracket-type connecting part (10) rests with its entire length firmly against the end face of the wall part (16).

11. Headlamp according to any of claims 1 to 9, characterised in that formed onto the crosspiece (21) joining the legs (14 and 15) of the bracket-type connecting part (10) is a resilient element (36) which rests pretensioned against the end face of the wall part (16).

12. Headlamp according to claim 11, characterised in that the resilient element (36) is a vane-type construction with the vane (36) formed centrally on the crosspiece (21), while resting with its free end portions (37) resiliently against the end face of the wall part (16).

13. Headlamp according to any of the preceding claims, characterised in that the cross-section of the locking lug (17') of the bracket-type connecting part (10) describes an arc of a circle, by which said lug rests against the undercut (18) constituted by a circular opening (38) in the wall part (16) and the mid-point of which lies on the centre line of the circular opening (38).

14. Headlamp according to any of the preceding claims, characterised in that the wall part (16), which is coupled to an adjustable connecting part (26 or 27), extends with one broad lateral face perpendicular to the swivel axis about which it can be swivelled.

15. Headlamp according to any of claims 1 to 14, characterised in that the point of connection (13, 32) is disposed directly above the crosspiece (21) joining the legs (14 and 15) of the bracket-type connecting part (10).

16. Headlamp according to any of claims 1 to 15, characterised in that, viewed in the direction of insertion of the bracket-type connecting part (10), the wall part (16) is T-shaped and its end face in the vicinity of the vertical bar (30) of the T serves as a contact face for the region of the connecting parts forming the point of connection (13, 33), whereas the bracket-type connecting part (10) is pushed onto the region of the wall part (16) forming the crossbar (31) of the T.

17. Headlamp according to claim 16, characterised in that one leg (14) of the bracket-type connecting part (10) engages in a recess (34) in the T-shaped wall part (16).

18. Headlamp according to claim 16 or 17, characterised in that the height of the wall part (16) is less in the vicinity of the vertical bar (30) of the T than in the vicinity of the crossbar.

19. Headlamp according to any of claims 1 to 18, characterised in that the wall part (16) merges into a flattened wall section (28) of the dish-shaped reflector.

20. Headlamp accoding to any of claims 1 to 19, characterised in that two wall parts (16) extend perpendicular to one another by their broad lateral faces serving as a contact surface.

## Revendications

1. Projecteur pour véhicules, présentant les caractéristiques suivantes :
- un réflecteur (1) réalisé en matière plastique est relié à une pièce de réception (8) en pouvant être réglé autour d'un ou de deux axes (6, 7) de préférence perpendiculaires l'un à l'autre,
- la liaison du réflecteur (1) avec la pièce de réception (8) est réalisée par une première pièce de liaison (9) en forme de broche rapportée sur la pièce de réception (8), et une seconde pièce de liaison (10) réalisée en matière plastique, qui est rapportée, dans la direction de sortie de la lumière, sur une partie de paroi (16) réalisée d'un seul tenant avec la paroi du réflecteur sur le côté arrière de ce réflecteur, et présentant des surfaces latérales larges planes,
- la première pièce de liaison (9) en forme de broche s'étend dans la direction de sortie de la lumière et est pourvue, à son extrémité libre proche du réflecteur (1), d'une rotule (13) qui est insérée par encliquetage automatique, dans une cuvette sphérique (32) de la seconde pièce de liaison (10) réalisée en matière plastique, la direction d'assemblage correspondant à la direction d'insertion (11) du réflecteur (1) dans la pièce de réception (8),
caractérisé
- en ce que l'épaisseur de paroi de la partie de paroi (16) réalisée d'un seul tenant avec le réflecteur (1) sur le côté arrière de ce réflecteur, correspond à l'épaisseur de paroi du réflecteur (1) à paroi mince,
- en ce que la seconde pièce de liaison (10) rapportée sur la partie de paroi (16) est réalisée sous forme d'agrafe,
- en ce que, vu dans la direction d'insertion (11) du réflecteur (1), la zone de liaison (13, 32) entre la première et la seconde pièce de liaison (9 et 10) est alignée derrière une partie de paroi (16) à faible épaisseur de paroi du réflecteur (1), et
- en ce que sur une surface latérale large de la partie de paroi (16), est formée une nervure (22) qui est reliée au côté arrière du réflecteur (1), s'étend parallèlement à la direction de montage de la pièce de liaison (10) en forme d'agrafe, et le long de laquelle s'étend, à proximité immédiate, une aile (14 ou 15) de la pièce de liaison (10) en forme d'agrafe, par un de ses côtés longitudinaux étroits.

2. Projecteur selon la revendication 1, caractérisé en ce qu'au moins une pièce de liaison (10) en forme d'agrafe est disposée avec ses ailes (14 et 15) entre des nervures (22) faisant saillie de la partie de paroi (16).

3. Projecteur selon la revendication 2, caractérisé en ce que les nervures (22) sont disposées sur une ou sur les deux faces latérales larges de la partie de paroi (16).

4. Projecteur selon l'une des revendications 1 à 3, caractérisé en ce qu'au moins une aile (14 ou 15) de la pièce de liaison (10) en forme d'agrafe se rétrécit, avec ses côtés longitudinaux étroits, en direction de son extrémité libre.

5. Projecteur selon la revendication 4 caractérisé en ce qu'une aile (15) de la pièce de liaison en forme d'agrafe s'appuie, avec ses côtés longitudinaux étroits, contre les nervures (22).

6. Projecteur selon l'une des revendications 1 à 5, caractérisé en ce que deux nervures (22) formées sur une face latérale large d'une partie de paroi (16), forment une rainure en forme de coin, sur les parois latérales (35) de laquelle, disposées en coin l'une par rapport à l'autre, s'appuie de manière élastique, une aile (14) de la pièce de liaison (10) en forme d'agrafe comportant des côtés longitudinaux étroits disposés en coin de manière correspondante.

7. Projecteur selon l'une des revendications 1 à 6, caractérisé en ce qu'un talon d'encliquetage (17, 17') formé sur le tronçon d'extrémité libre d'une aile (15) de la pièce de liaison en forme d'agrafe, s'engage par encliquetage automatique dans une contre-dépouille (18) de la partie de paroi (16).

8. Projecteur selon la revendication 7, caractérisé en ce que le talon d'encliquetage s'appuie sur le bord de la contre-dépouille (18), par l'intermédiaire d'une surface inclinée d'entrée (20) le rétrécissant vers l'extrémité libre.

9. Projecteur selon la revendication 7 ou 8, caractérisé en ce que la partie de paroi (16) comporte sur le tronçon d'extrémité voisin de l'âme (21) reliant les ailes (14 et 15) de la pièce de liaison (10) en forme d'agrafe, une surface inclinée d'entrée (29) pour le talon d'encliquetage (17, 17').

10. Projecteur selon l'une des revendications 1 à 9, caractérisé en ce que l'âme (21) reliant les ailes (14 et 15) de la pièce de liaison (10) en forme d'agrafe, s'appuie fermement sur la totalité de sa longueur, contre la surface frontale de la partie de paroi (16).

11. Projecteur selon l'une des revendications 1 à 9, caractérisé en ce que sur l'âme (21) reliant les ailes (14 et 15) de la pièce de liaison (10) en forme d'agrafe, est formé un élément élastique (36) qui s'appuie sous précontrainte sur la surface frontale de la partie de paroi (16).

12. Projecteur selon la revendication 11, caractérisé en ce que l'élément élastique (36) présente une configuration en forme d'ailette, cette ailette (36) étant reliée au centre de l'âme (21), tandis qu'elle s'appuie avec ses tronçons d'extrémité libres (37), de manière élastique, sur la surface frontale de la partie de paroi (16).

13. Projecteur selon l'une des revendications précédentes, caractérisé en ce que le talon d'encliquetage (17') de la pièce de liaison (10) en forme d'agrafe, décrit, en section transversale, un arc de cercle, par l'intermédiaire duquel il s'appuie sur une contre-dépouille (18) formée par une ouverture (38) de forme circulaire de la partie de paroi (16), et dont le centre se situe sur l'axe central de l'ouverture (38) de forme circulaire.

14. Projecteur selon l'une des revendications précédentes, caractérisé en ce que la partie de paroi (16) qui est couplée à une pièce de liaison réglable (26 ou 27), s'étend, avec sa face latérale large orientée perpendiculairement à l'axe de pivotement autour duquel elle est susceptible de pivoter.

15. projecteur selon l'une des revendications 1 à 14, caractérisé en ce que directement au-dessus de l'âme (21) reliant les deux ailes (14 et 15) de la pièce de liaison (10) en forme d'agrafe, se trouve la zone de liaison (13, 32).

16. Projecteur selon l'une des revendications 1 à 15, caractérisé en ce que la partie de paroi (16), vue dans la direction d'insertion de la pièce de liaison (10) en forme d'agrafe, présente une configuration en forme de "T", et constitue, avec sa surface frontale dans la zone de la branche (30) verticale de la forme en "T", une surface d'appui pour la zone des pièces de liaison formant la zone de liaison (13, 33), tandis que la pièce de liaison (10) en forme d'agrafe est engagée sur la zone de la partie de paroi (16) formant la branche transversale (31) de la forme en "T".

17. Projecteur selon la revendication 16, caractérisé en ce qu'une aile (14) de la pièce de liaison (10) en forme d'agrafe, s'engage dans un évidement (34) de la partie de paroi (16) en forme de "T".

18. Projecteur selon la revendication 16 ou 17, caractérisé en ce que la partie de paroi (16) présente une hauteur plus faible dans la zone de la branche verticale (30) de la forme en "T", que dans la zone de la branche transversale.

19. Projecteur selon l'une des revendications 1 à 18, caractérisé en ce que la partie de paroi (16) se raccorde à un tronçon de paroi (28) aplati du réflecteur en forme de coque.

20. Projecteur selon l'une des revendications 1 à 19, caractérisé en ce que deux parties de paroi (16) s'étendent perpendiculairement l'une à l'autre avec leur faces latérales larges servant de surfaces d'appui.
